Europäisches Patentamt

European Patent Office

Office européen des brevets

(19)

(11) Publication number: **0 037 746**
**B1**

(12) **EUROPEAN PATENT SPECIFICATION**

(45) Date of publication of patent specification: **09.04.86**

(21) Application number: **81302309.0**

(22) Date of filing: **15.07.80**

(60) Publication number of the earlier application in accordance with Art. 76 EPC: **0 023 012**

(51) Int. Cl.⁴: **F 15 B 15/06, F 15 B 15/08, F 16 H 25/12, F 16 H 31/00**

(54) **A rotary actuator.**

(30) Priority: **21.07.79 GB 7925529**
**07.12.79 US 101993**

(43) Date of publication of application:
**14.10.81 Bulletin 81/41**

(45) Publication of the grant of the patent:
**09.04.86 Bulletin 86/15**

(84) Designated Contracting States:
**DE FR IT**

(56) References cited:
**FR-A-1 450 258**
**FR-A-2 399 564**
**GB-A-1 006 070**
**GB-A-1 159 745**
**GB-A-2 026 063**
**US-A-1 765 377**
**US-A-3 965 775**
**US-E- 29 252**

(73) Proprietor: **FMC CORPORATION**
**200 East Randolph Drive**
**Chicago Illinois 60601 (US)**

(72) Inventor: **Milberger, Lionel John**
**19402 Enchanted Oaks**
**Spring Texas (US)**

(74) Representative: **Taylor, Derek George et al**
**Mathisen, Macara & Co. The Coach House 6-8**
**Swakeleys Road**
**Ickenham Uxbridge UB10 8BZ (GB)**

## Description

This invention relates to a rotary actuator apparatus, in particular for use for the hydraulic control of a subsea device, and more particularly in hydraulic apparatus for the control of a relatively large number of subsea devices using only a pair of hydraulic pressure source lines from a surface vessel to the sea floor.

The production of oil and gas from offshore wells has developed into a major endeavour of the petroleum industry. Wells are commonly drilled several hundred or several thousand feet below the surface of the ocean, substantially below the depth at which divers can work efficiently. As a result, the drilling and operating of a subsea well must be controlled from a surface vessel or from an offshore platform. The testing, production and shutting down of the subsea well is regulated by a subsea christmas tree which is positioned on top of the subsea wellhead. The christmas tree includes a plurality of valves having operators which are biased to a non-active position by spring returns, and it has been found convenient to actuate these operators by hydraulic fluid which is directly controlled from a surface vessel. For this purpose, a plurality of hydraulic lines are commonly run from the surface vessel to the wellhead to open and close these valves, and to actuate other devices in the well and the wellhead during installation, testing and fluid production through the subsea well equipment, and also during workover procedures being performed on the well.

It is inconvenient to have large numbers of hydraulic control lines running between a surface vessel or offshore platform and the wellhead, and accordingly it is proposed, in European Patent No. 23012, to control all the valves by means of a single hydraulic rotary actuator connected to just one set of two hydraulic control lines.

It is known from U.S. Patents Nos. 1765377 and 3695775 to provide an actuating mechanism in which successive reciprocating axial displacements of a plunger are converted into indexed rotary movements in one direction of an output shaft. The plunger is limited to travelling axially of the actuator, and has a cam follower which follows successive cam slots formed in a cam member coupled to the shaft. As the plunger is moved in one direction, the cam follower turns the output shaft; as the plunger is withdrawn, the output shaft is held in position, until the next cycle commences with the cam follower following the next cam slot in the cam member.

These known actuators are capable of indexing rotary movement in one direction, and it is an object of the invention to provide a bi-directional rotary actuator.

The present invention provides a rotary actuator for providing successive increments of rotary motion of a shaft of the type comprising a first cam member coupled to said shaft, said first cam member having a plurality of cam slots therein, a plunger mounted for axial movement relative to said shaft and having means for preventing rotary movement of said plunger, a cam follower mounted on said plunger and co-operating with said cam slots, said cam slots each being effective to produce one increment of rotation of said shaft when said plunger is moved on a first axial direction, and means for preventing rotation of said shaft when said plunger is moved in an opposite second axial direction, said actuator being characterised by a second cam member concentric with the first cam member, coupled to said shaft and having a plurality of cam slots therein, the cam follower having first and second cam engaging surfaces, said cam follower being releasably connectable to said plunger in a first position for cooperation with successive cam slots of said plurality of cam slots in said first cam member to produce one increment of rotation of said shaft in a first direction when said first cam engaging surface co-operates with one of said successive cam slots in said first cam member as said plunger is moved in said first axial direction, and releasably connectable to said plunger in a second position for co-operation with successive cam slots of said plurality of cam slots in said second cam member to produce one increment of rotation of said shaft in a second direction opposite to said first direction when said second cam engaging surface co-operates with one of said successive cam slots in said second cam member as said plunger is moved in said first axial direction, and means for positioning each successive cam slot opposite the respective cam engaging surface when said plunger is moved in said second axial direction moving the cam engaging surface out of engagement with the immediate cam slot, and means in each last cam slot of the plurality of cam slots in each cam member for shifting said cam follower between said first and second positions.

The invention will now be described by way of example with reference to the accompanying drawings in which:

Figure 1 is a schematic diagram of a switching control and valve circuitry of a subsea production system in which apparatus according to the present invention can be used;

Figure 2 is a diagrammatic side elevation, with portions broken away, of a valve and valve actuator for use with the present invention;

Figure 3 is a central vertical section of a valve section for use with the present invention showing the means for connection to an adjacent valve section and to a valve actuator;

Figure 4 is a view of the valve section taken in the direction of the arrows 4—4 of Figure 3;

Figure 5 is a view of the valve section taken in the direction of arrows 5—5 of Figure 3;

Figure 6 is a plan view of a rotor used in the valve section of Figure 3;

Figure 7 is a schematic diagram of the valve section of Figure 3 with the rotor of Figure 6.

Figures 8A and 8B illustrate the physical configuration, and the operation characteristics of a plurality of types of valve rotors according to the present invention.

Figure 9 is a central vertical section of the valve actuator of Figure 2.

Figure 10 is a diagrammatic isometric view, partly in section and with portions broken away, of a valve actuator according to the present invention.

Figure 11 is a horizontal section taken along the line 11—11 of Figure 9.

Figure 12 is a horizontal section taken along the line 12—12 of Figure 9.

Figure 13 comprises a table which illustrates the steps of operation of a subsea christmas tree and of its flow control valves.

Figures 14 and 15 are additional embodiments of the hydraulic circuitry which can be used to control operation of subsea valves.

Figure 16 is another embodiment of a valve section which can be used with the present invention.

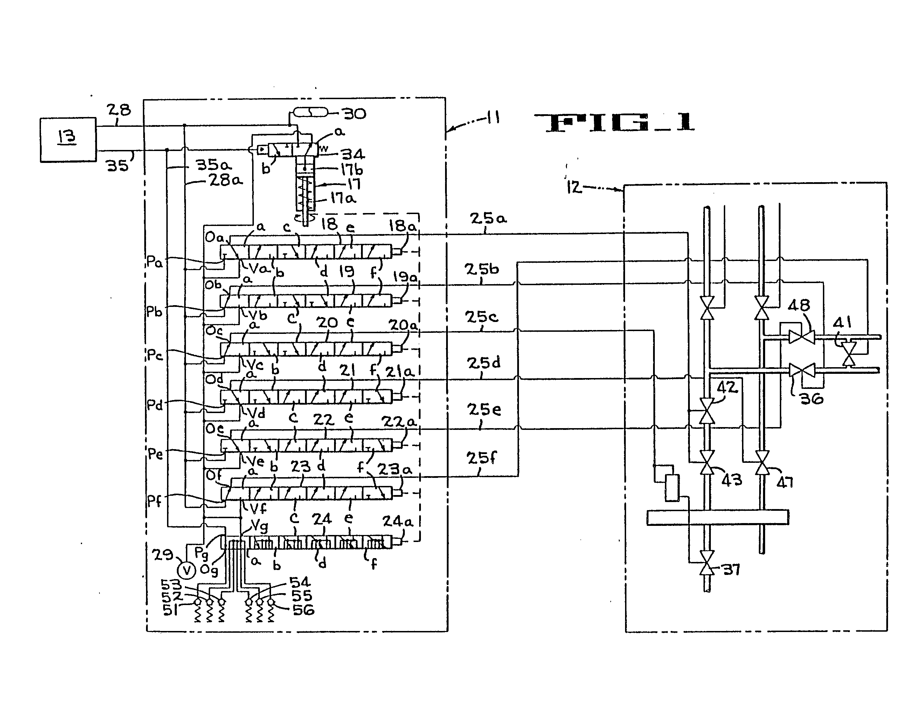

Figure 1 diagrammatically illustrates hydraulic apparatus for controlling a plurality of valves or other subsea operators while using only a pair of hydraulic pressure source lines. The present apparatus as illustrated in Figure 1 includes a control module 11 for use with a subsea christmas tree 12 having a plurality of hydraulically controlled valves with their associated valve operators. The control module 11 is connected to a surface control center 13 having the usual pressure pumps, pressure gauges and switches, none of which is shown. The control module 11 includes a rotary actuator 17 connected to a rotary switch having a plurality of rotatable valve sections 18—24 each having a pressure input Pa—Pg, an output Oa—Og, and a vent Va—Vg. Each valve section includes a plurality of positions a—f each having either the pressure input connected to the output or having the output connected to the vent. Each of the pressure inputs Pa—Pg is connected to the hydraulic supply line 28 which is provided with pressurized fluid from the control center 13, and each of the vents Va—Vg is connected to a vent 29 which is vented into the sea. An accumulator 30, which is connected to the hydraulic supply line 28, aids in providing a stabilized value of hydraulic pressure to the valve sections 18—24 and to operate the actuator 17 through a pilot valve 34. The rotary actuator 17 includes a rotatable shaft 17a which is coupled to a plurality of rotatable shafts 18a—24a of the valve sections 18—24.

When a hydraulic pilot line 34 is unpressurized the pilot valve 34 is in the position shown in Figure 1 wherein upper chamber 17b of the actuator 17 is connected to the vent 29 through the valve section a, whereby the actuator shaft 17a and the valve sections 18—24 remain in a stationary position. When pressure is admitted to the hydraulic pilot line 34 the spool of the valve 34 shifts so that liquid from the hydraulic supply line 28 is coupled through the section b of the pilot valve 34 to the upper chamber 17b, causing the actuator 17 to rotate the valve sections 18—24 to another distinct position. When the valves 18—24 are in the positions shown in Figure 1, hydraulic pressure from the hydraulic supply line 28 is coupled through portion a of valve 19 through a hydraulic line 25b to a production wing valve 36, causing the wing valve to open. Hydraulic fluid coupled through portion a of valve 20 and portion a of valve 23 through hydraulic lines 25c, 25f also causes a downhole safety valve 37 and a crossover valve 41 to open. An upper master valve 42 and a lower master valve 43 are connected to vent 29 through hydraulic line 25a and the portion a of valve 18, and an annulus master valve 47 and an annulus wing valve 48 are connected to the vent 29 by lines 25d, 25e through the portions a of valve sections 21 and 22, respectively.

The lowermost valve 24 and a plurality of pressure relief valves 51—56 provide a predetermined upper value of pressure on the pilot line 35 at the control center to indicate the position of the valve 24, thereby also indicating the position of the rotary actuator 17 and of the other valve 18—23. For example, when all the valves are in their a positions, the pressure relief valve 51 is connected through a portion a of valve 24 to the pilot line 35 and limits the maximum pressure on the pilot line to 1000 psi. When the valves are all in their b positions the pressure relief valve 52 limits the pressure on the pilot line 35 to 1400 psi, thereby indicating that the valves and the actuator are in said b positions.

Figures 14 and 15 disclose other embodiments of circuits for interconnecting the actuator pilot valve 34, the actuator 17 and the valve sections. In Figure 14 the position signal line 35a is connected to the supply line 28 through the portion b of the pilot valve 34 so that the pressure on line 28 can be used to determine the rotary position of the valve section 18—24 during the time when the pilot valve 34 is energized. When the pilot valve 34 is deenergized the signal line 35a is connected to the vent 29. The hydraulic supply line 28 is always connected to the valve section just as shown in Figure 1.

The hydraulic supply line 28 of Figure 15 is connected to a feed line 28a when the pilot valve 34 is deenergized. When the pilot line 35 of Figure 15 is energized the supply line 28 is disconnected from the feedline 28a thereby allowing the rotary position of the valves to be indicated by the pressure on line 28 and disconnecting the christmas tree valves until the pilot valve 34 is again deenergized.

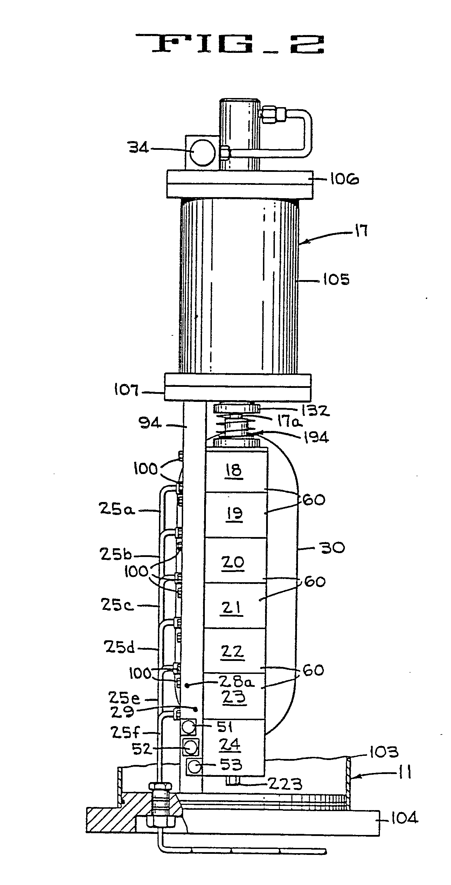

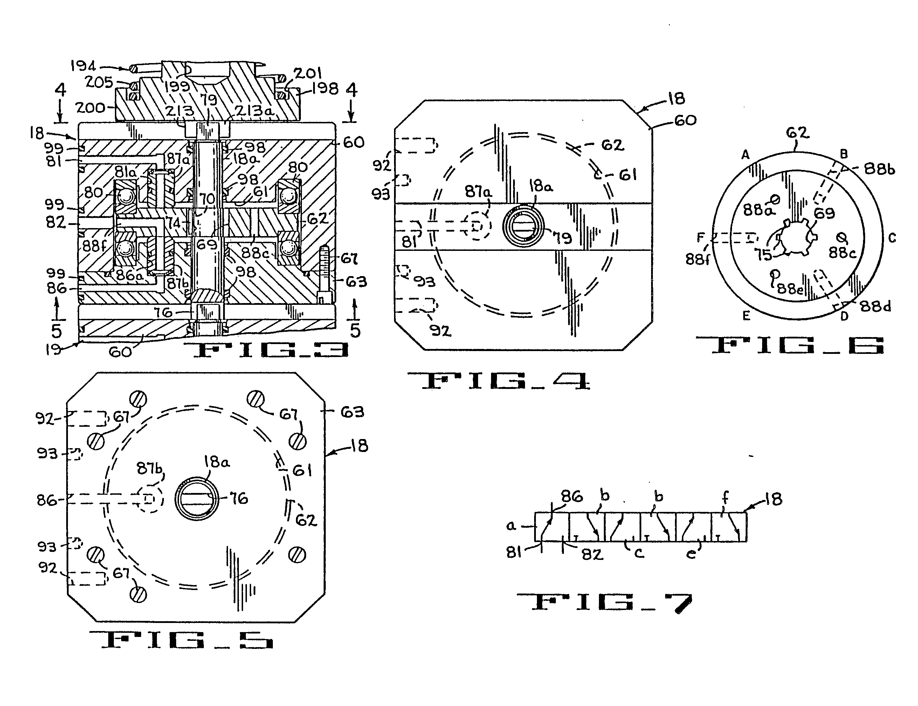

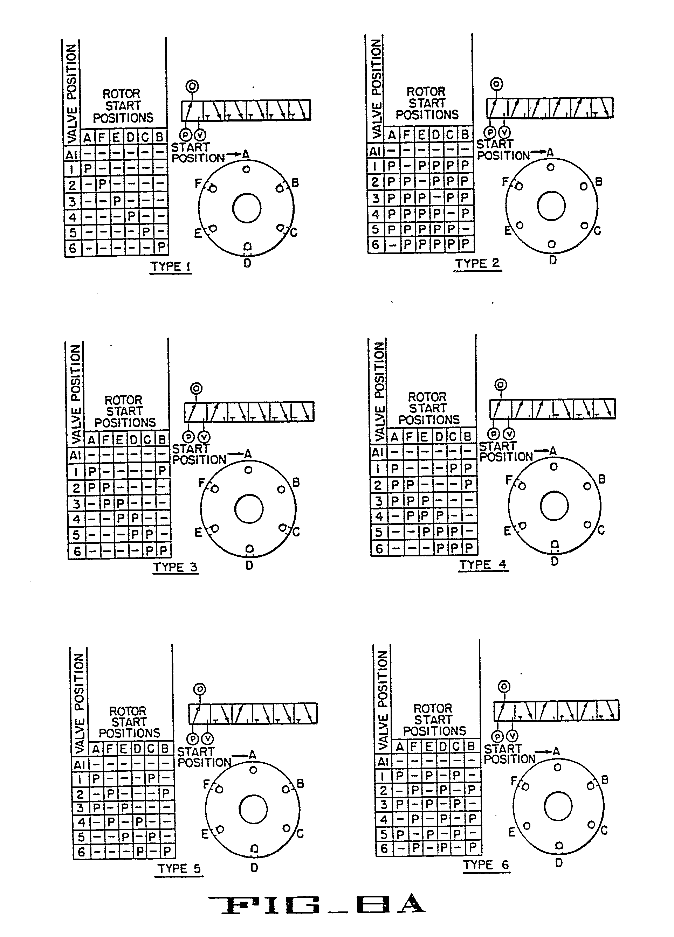

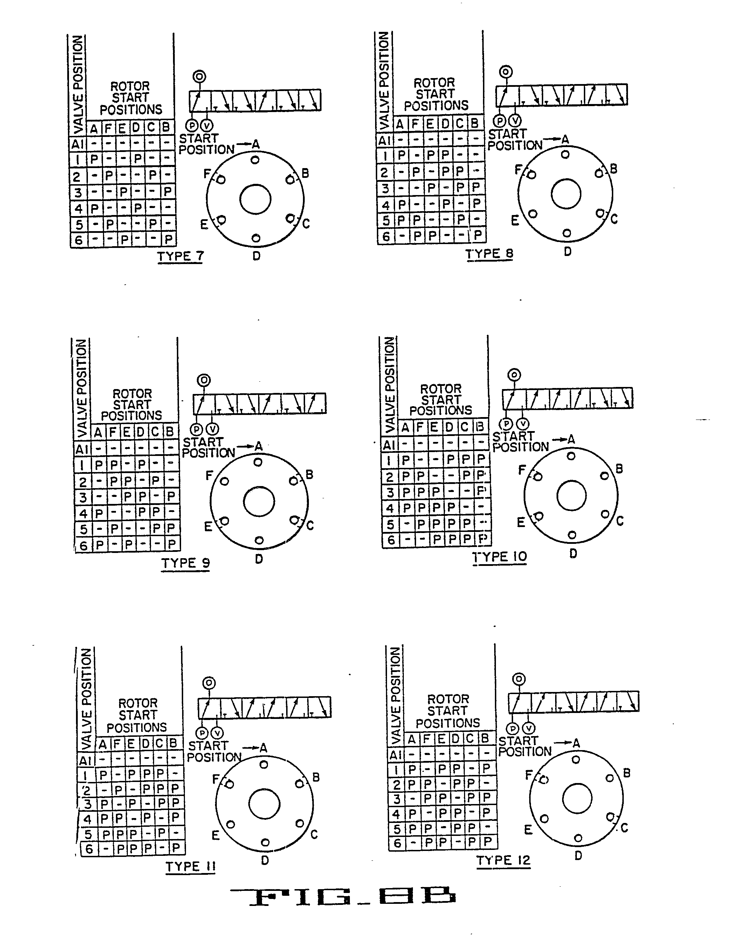

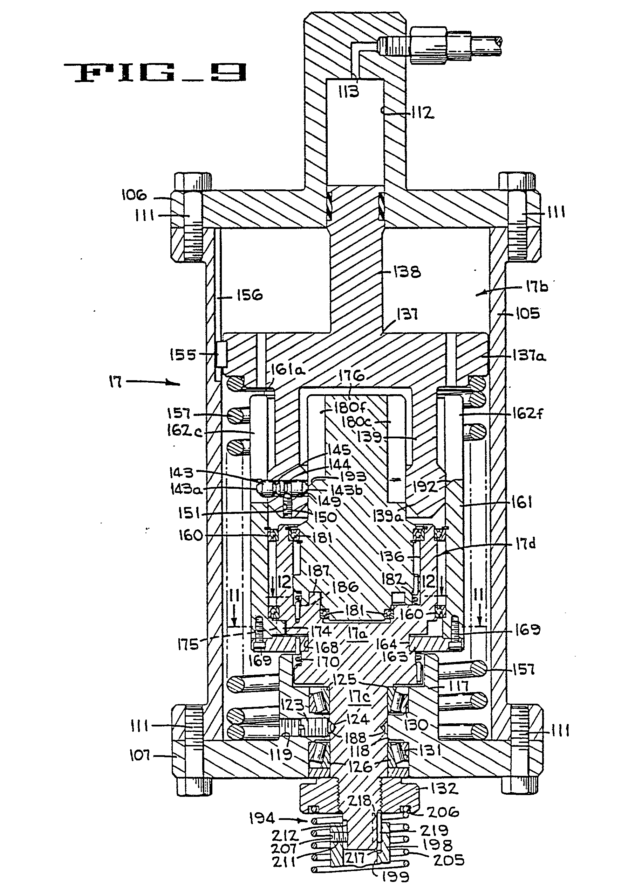

The valve sections 18—24 are individually removable units which can be stacked in an end-to-end manner shown in Figure 2, with the shaft 17a of the actuator 17 connected to the shaft 18a of the uppermost valve section 18, and with each of the valve sections having a shaft connected to the shaft of the valve section positioned immediately above it. Each of the valve sections includes a body 60 (Figure 3) having a generally cylindrical chamber 61, with a generally disc shaped rotor 62 mounted therein and a cover 63 connected to the body 60 by a plurality of cap screws 67. The rotor 62 is rotatably mounted in the chamber 61 by the shaft 18a which is pressed into bore 69 in the rotor (Figures 3, 6). The rotor is connected to the shaft and retained in any one of six positions (Figure 6) thereon by a key 70 (Figure 3) which resides partially in a slot 74 in the shaft, and partially in any one of the six slots 75 in the rotor 62. One end of the shaft 18a includes a female slot 76 (Figure 5), and the other shaft end includes a mating male projection 79 (Figure 4). When the valve sections are stacked, the male projection 79 on the upper end of one shaft fits into the female slot 76 on the lower end of an adjacent valve section to interconnect the sections for unitary rotation of their shafts and rotors.

A plurality of ball or other suitable bearings 80, mounted between the rotor 62, the body and the cover 63, relieve strain at the connection between the shaft and the rotor. The valve section (Figure 3) includes a right angle pressure port 81 and a vent port 82 drilled radially in the body, and a right angle outlet port 86 in the cover 63. A pair of shear seals 87a, 87b are mounted in an enlarged portion 81a, 86a of the ports 81, 86 to provide a fluid-tight seal between the ports and the rotor.

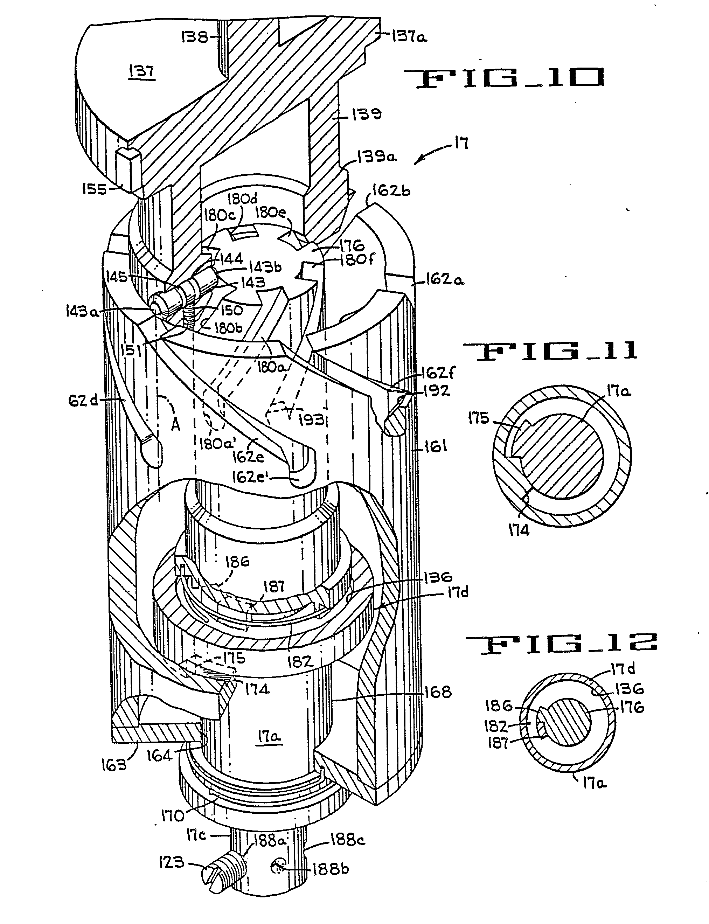

The rotor 62 (Figures 3, 6) includes a plurality of holes 88a—88f drilled in either a straight-line pattern or a right angle pattern. When any one of the right angle holes 88b, 88d and 88f are rotated adjacent the shear seals 87a, 87b the outlet port 86 is connected to the vent port 82 as shown in Figure 3. When any one of the straight line holes 88a, 88c and 88e are rotated adjacent the shear seals the pressure port 81 is connected directly to the outlet port 86. The drilling pattern of the rotor shown in Figure 6 is shown schematically in Figure 7.

A plurality of threaded mounting bores 92 (Figures 4, 5) and a plurality of dowel pin holes 93 facilitate mounting the valve sections to a manifold 94 (Figure 2). A plurality of seals 98 provide sealing around the shaft 18a, and a plurality of seals 99 provide fluid tight connections between the pressure ports 81, the vent port 82, the outlet port 86 and the connections on the manifold 94. A seal 101 provides a fluid-tight connection between the body 60 and the cover 63.

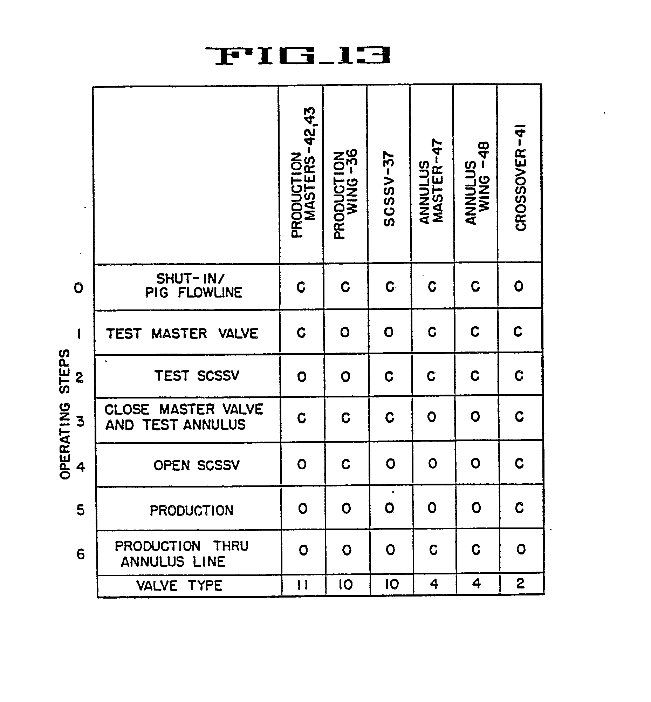

In order to control a plurality of subsea valves in a desired sequence it may be necessary to provide a unique pattern of straight-through and right angle holes for the rotors of each of the valve sections. For example, to control the subsea tree 12 of Figure 1 the sequence of operation shown in the matrix of Figure 13 may be used. In the shut-in position, with the supply line 28 and the pilot line 35 unpressurized, the crossover valve 41 (Figure 1) is open, as represented by the letter O (Figure 13), and all the other valves are closed, as represented by the letter C. In the example shown in Figure 13 the valves 42, 43 are closed in steps 0, 1 and 3, and are open in steps 2 and 4—6. This requires a rotor with the pattern of straight-through and angular holes shown in type No. 11 of Figure 8B, and with the rotor starting in the F position in order to provide pressure to the valves 42, 43 in steps 2 and 4—6. This can be done by positioning and locking the rotor 62 on the shaft 18a (Figures 3, 6), with the right angle hole F at the shaft's No. 1 position. A type 10 valve rotor (Figure 8B) with the right angle hole E at the No. 1 shaft position, is required to control the valve 36. Proper positioning of the twelve rotor types of Figures 8A and 8B with respect of the actuator drive shaft facilitates operation of the tree 12 in a six-step manner, and also all possible combinations of sequences of operations of the valves. Other combinations, and/or specially drilled rotors, are not required when the twelve basic rotor types shown in Figures 8A and 8B are used. In a system where a different number of steps of operation are required, a different number of holes can be spaced around the rotor, and the rotors rotated a different number of degrees as each step of the operation is carried out.

The manifold 94 (Figure 2) is mounted on a base plate 104, and includes a plurality of internal passageways (not shown) which connect the ports 81, 82, 86 of the valve sections 18—23 to the various hydraulic lines, such as the supply line 28, pilot line 35 and output lines 25a—25f of Figure 1, and connect the pressure relief valves 51—56 to the valve section 24. The valve sections 18—24 (Figure 2) are secured to the manifold 94 by a plurality of cap screws 100 which are threaded into bores 92 (Figures 4, 5) in the valve bodies 60. The actuator 17 is fixed to the upper end of the manifold 94. A housing 103, sealed to the base plate 104 by a seal 108, provides fluid-tight protection to the actuator 17 and valve assembly.

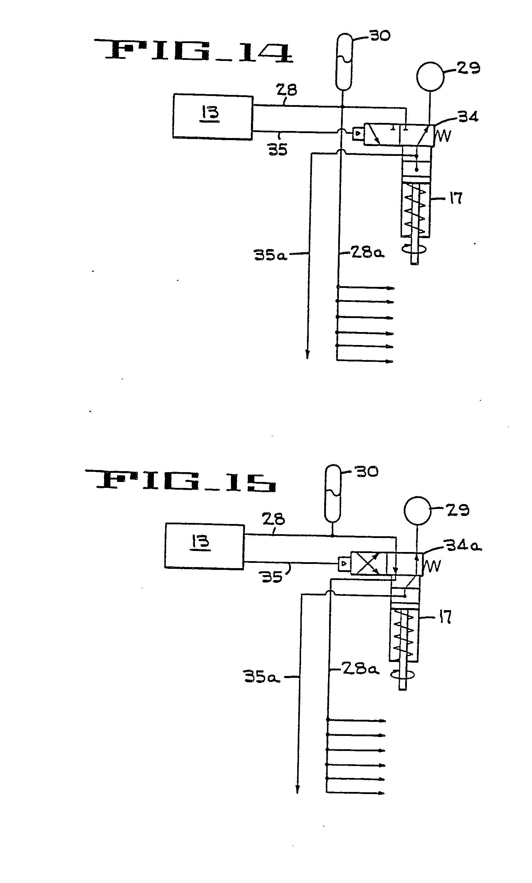

The actuator 17 (Figures 9—12) includes a generally cylindrical tubular housing 105 having a pair of end plates 106, 107 connected thereto by a plurality of cap screws 11. The upper end plate 106 includes an axially extending fluid chamber 112 and a right angle port 113 extending between the upper end (Figure 9) of the fluid chamber and a hydraulic line 109. The lower end plate 107 includes an axial flange 117 and an axial bore extending through the center of the end plate. A spring loaded detent 123, having a ball-shaped portion 124 at the radial inner end thereof, resides in a radial hole 119.

The cylindrical actuator shaft 17a includes a lower portion 17c mounted in the axial bore 118. A pair of roller bearing assemblies 125, 126 mounted in a pair of recesses 130, 131 of the lower end plate 107, rotably mount the shaft to the lower end plate. The lower portion of the actuator shaft is threaded to nut 132. The shaft 17a includes an enlarged upper portion 17d having an axially extending bore 136.

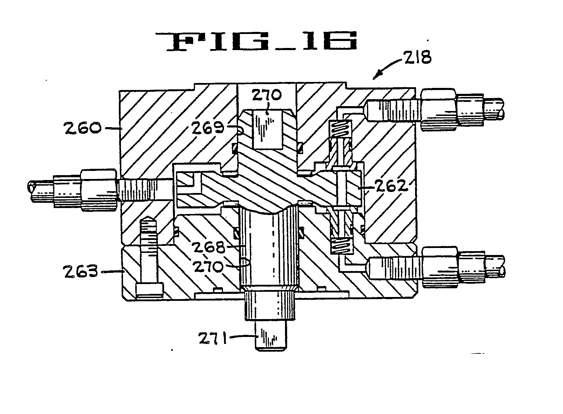

An axially movable plunger 137 (Figures 9, 10) is located in the upper end of the housing 105, and this plunger includes a piston 138 extending upwardly into the fluid chamber 112 of the upper end plate 106, and a radial flange 137a extending to the wall of the housing 105. The lower portion of the plunger 137 includes a sleeve 139 having a radially expanded portion 139a. A cylindrical pin 143, having a pair of circumferentially extending grooves 144, 145, is mounted in a radial bore 149 in the expanded sleeve 139a. A spring detent 150 (Figures 9, 10), mounted in a radial bore 151 (Figure 9), intersects the pin 143 and rests in one of the grooves 144, 145. A key 155 (Figures 9, 10), connected to the plunger 137 and riding in an axial slot 156 in the housing 105, prevents rotational movement of the plunger 137 but allows vertical movement thereof relative to the housing. A coil spring 157 (Figure 9), connected between the lower end plate 107 and the radial flange 137a, biases the plunger in an upward direction, so that the absence of hydraulic pressure on the upper end of the piston 138 the plunger flange 137a moves upward to rest against the upper end plate 106.

A hollow cylindrical outer cam 161 (Figures 9, 10), having six angular slots 162a—162f (only five shown) spaced about the upper portion thereof, is rotatably mounted around the upper portion 17c of the actuator shaft 17a by a plurality of bearings 160. The outer cam 161 also includes an additional angled slot which is not shown due to the problem of cluttering the drawings with too many details. A plate 163, having an axial bore 164, is mounted in an annular groove 168 (Figure 9) in the shaft 17a and secured to the outer cam by a plurality of cap screws 169. The lower portion of the diagrammatic drawing of Figure 10 has been stretched to better show other details, so the groove 168 in Figure 10 appears to be much wider than the same groove as shown in the sectional view of Figure 9. A torsion spring 170 (Figures 9, 10) is connected between the shaft 17a and the outer cam 161 to bias a radial inward cam lug 174 (Figures 10, 11) toward a radial outward shaft lug 175. The rotation of outer cam 161 about the shaft 17a is limited to an arc of less than 360 degrees by the lugs 174, 175. The lugs 174, 175 constitute uni-directional clutch means, providing drive between the outer cam 161 and the shaft 17a.

A cylindrical inner cam 176 (Figures 9, 10, 12) having a plurality of angular slots 180a—180f spaced about the upper portion (Figure 10) thereof, is rotatably mounted in the axial bore 136 of the shaft 17a by a plurality of bearings 181. The slots 180a—180f (Figure 10) are angled clockwise as they extend downward from the top of the inner cam 176, in contrast to the slots 162a—162e of the outer cam 161 which are angled counter-clockwise as they extend downward. A torsion spring 182 (Figures 9, 10) is connected between the shaft 17a and the inner cam 176 to bias a radial outward cam lug 186 (Figures 10, 12) toward a radial inward shaft lug 187. The lugs 186, 187 constitute uni-directional clutch means, providing drive between the inner cam 176 and the shaft 17a.

The actuator shaft 17a is normally retained in one of six rotary positions by the detent 123 (Figures 9, 10) extending into one of a plurality of shallow bores 188 in the lower portion 17c of the shaft 17a. As stated above, the number of rotary positions of the shaft and of the valve sections can be changed to a greater or lesser number as required. When the fluid chamber 112 (Figure 9) is unpressurized the plunger 137 is biased to the upper end of the housing 105 with the pin 143 slightly above the upper end 161a of the outer cam 161, and with one end of the pin 143 (Figure 10) radially above the open end of one of the outer cam slots 162a—162e and the other end of the pin 143 radially above the open end of one of the inner cam slots 180a—180f.

When the pin or cam follower 143 (Figure 10) is positioned radially outward with the outward end 143a immediately above the open end of one of the outer cam slots 162a—162e, the detent 150 is positioned in the groove 144 to retain the pin in the outer cam slot. When pressurized fluid is admitted through the port 113 to the fluid chamber 112, the plunger 137 (Figures 9, 10) is moved axially downward forcing the pin 143 downward in the adjacent slot, with the pin moving along the radially extending line A (Figure 10), as the plunger is prevented from rotating by the key 155 in the slot 156 (Figure 9). For example, when the pin 143 moves down into the slot 162, 162e, the pin 143 progresses downward along the line A until it reaches the lower end 162e' of the slot causing the outer cam 161 to rotate 60 degrees clockwise (as viewed from the actuator). Clockwise rotation of the cam 161 and the cam lug 174 causes the shaft lug 175 (Figure 11) and the shaft 17a to rotate 60 degrees clockwise and for the detent 123 to move from bore 188a (Figure 10) into the adjacent detent bore 188b.

When pressure is released from the chamber 112 (Figure 9) the plunger 137 is forced upward by the coil spring 157, moving the pin 143 (Figure 10) upward along the line A, in the slot 162e and rotating the outer cam 60 degrees counter-clockwise. The shaft 17a is prevented from rotating by the detent 123 in the bore 188b and the cam lug 174 (Figure 11) is rotated counter-clockwise away from the shaft lug 175. The counter-clockwise rotation of the outer cam 161 "winds" the torsion spring 182 (Figures 9, 10) to bias the outer cam lug 174 more strongly toward the shaft lug 175. When the pin 143 moves out of the open end of the slot 162e the spring 170 causes the cam 161 to quickly rotate 60 degrees clockwise, with the upper end of the cam slot 162f stopping adjacent the pin 143, as the outer cam lug 174 contacts the shaft lug 175. This same sequence is repeated each time the plunger moves down and returns to the upper position, with the outer cam and shaft rotating 60 degrees clockwise as the pin 143 moves down to the bottom of a cam slot, the shaft is stopped and held in place by the detent 123 while the pin moves upward, rotates the outer cam counter-clockwise and winds up the tension spring. When the pin 143 moves above the outer cam the cam snaps around clockwise with the pin adjacent another open end of another slot. This causes the shaft to rotate in increments between six distinct stopping points.

When the pin 143 reaches the lower end of the last cam slot 162f the radial outer end of the pin is pressed against a bevelled surface 192 (Figures 9, 10) causing the pin 143 to move radially inward with the end 143b of the pin in the lower end 180a' of the cam slot 180a in the inner cam 176. The detent 150 moves into the groove 145 of the pin to retain the pin in the slot 180a as the pin 143 and the plunger 137 move upward. Each time the plunger moves downward the pin 143 moves downward in one of the inner cam slots 180a—180f, with the pin moving along a line parallel to line A (Figure 10) causing the inner cam 176 to rotate counter-clockwise 60 degrees. The radial outward lug 186 on the inner cam 176 presses against the radial inward lug 187 on the shaft 17a (Figure 12) causing the shaft to rotate counter-clockwise and to move the detent 123 (Figure 10) into an adjacent bore 188a—188f (only part of which are shown) on the shaft 17a. An upward movement of the plunger 137 and the pin 143 causes the inner cam 176 (Figure 12) to rotate clockwise to move the lug 186 away from the lug 187 and "wind" the torsion spring 170 (Figures 10, 12) to bias the inner cam lug 186 more strongly toward the shaft lug 187. When the pin 143 moves upward, out of the open end of one of the slots 180a—180f, the torsion spring 182 causes the cam 176 to quickly rotate 60 degrees counter-clockwise with the upper end of the next cam slot stopping adjacent the pin 143, as the inner cam lug 186 contacts the shaft lug 187. Repeating the sequence causes the shaft 17a to rotate counter-clockwise in increments between each of six distinct stopping points.

When the pin 143 reaches the lower end of the last cam slot 180f (Figures 9, 10) the radial inner end 143b of the pin is pressed against a bevelled surface 193 causing the pin 143 to move radially outward into the lower end of the cam 162a and to again reverse the direction of rotation of the actuator shaft whenever the plunger 137 is moved downward. The shaft rotates through six positions in one direction, then automatically reverses the direction of rotation, and moves in reverse order through the same six positions. This process is automatically repeated as long as the plunger moves down and back up.

The actuator 17 is connected to the stacked valve sections 18—24 by a spring loaded coupling means 194 (Figures 2, 3, 9) comprising a generally cylindrical coupler 198 having an axial bore 199 extending downward through a portion of the coupler. A radial flange portion 200 includes an annular groove 201 (Figure 3) with one end of a compression spring 205 mounted in the groove 201 and the other end of the spring connected to an annular groove 206 in the nut 132 (Figure 9) to bias the coupler 198 toward the valve section 18 (Figure 2). The coupler 198 is secured to the lower end 17c of the actuator shaft 17a (Figure 9) by a set screw 207 mounted in a radial threaded hole 211 in the coupler and with the radial inner end of the set screw extending into an axial slot 212 in the shaft 17a. The slot 212 and set screw 207 allow the coupler 198 to travel axially along the shaft 17a through a distance determined by the vertical length of the slot 212. The lower end of the coupler includes a shaft 213 (Figure 3) having a radial slot 213a to receive the rectangular projection 79 on the upper end of the valve shaft 68 (Figures 3, 4) and to secure the shaft 18a of the upper valve section 18 to the shafts 213 and 17a. A slot 217 in the upper portion of the coupler 198 and a slot 218 in the lower end of the actuator shaft 17a (Figure 9) contain a key 219 which couple rotational motion from the shaft 17a to the coupler 198.

The purpose of the coupling means 194 is to couple the actuator shaft 17a to the shaft 18a of the valve sections 18—24 during normal operation of the actuator 17. If the actuator should fail, the coupler 198 (Figure 2) can be pried upward from the valve section 18 by an appropriate tool until the shaft 213 (Figure 3) of the coupler is disconnected from the shaft 18a of the upper valve section. A nut 223 (Figure 2) extending from the valve shaft 24a can be turned by an appropriate wrench to rotate the shaft 24a and temporarily operate the valves 18—24.

Another embodiment 218 of the valve sections 18—24 (Figure 2) is disclosed in Figure 16 with most of the elements functioning in a manner similar to the embodiment shown in Figures 3—6. However, rotor 262 and a shaft 268 are fixed together and the rotor cannot be removed and positioned in a different rotary position on the shaft as in the valve section of Figure 3. The rotor 262 is supported by the shaft 268 which rotates in a bore 269 in the valve body 260 and in a bore 270 in a cover 263. The upper end of the shaft 262 includes a square hole 270 and a square shaft end 271 on the other end. Several of the valve sections 218 can be stacked with the square end 271 of one valve shaft fitting into the square hole 270 in the shaft of an adjacent valve section. These stacked valve sections 218 can be connected to a single actuator as shown in Figure 2, but individual sections cannot be removed or replaced without disconnecting the sections mounted below the section being removed.

The present invention discloses apparatus for remote control of a relatively large number of hydraulically-operated subsea operators using only two hydraulic lines between a surface control center and a subsea device containing the operators. A valve actuator having a rotatable shaft or other output member which is movable to a plurality of distinct operating positions is coupled to a plurality of valves which are used to control the subsea operators. The valve actuator includes means for automatically reversing the direction of movement, so the valve is moved in a first direction through a sequence of distinct positions and then moved in a reverse direction through the same distinct positions.

**Claims**

1. A rotary actuator (17) for providing successive increments of rotary motion of a shaft (17a) of the type comprising a first cam member (176) coupled to said shaft, said first cam member having a plurality of cam slots (180a—180f) therein, a plunger (137) mounted for axial movement (A) relative to said shaft (17a) and having means (155, 156) for preventing rotary movement of said plunger (137), a cam follower (143) mounted on said plunger and co-operating with said cam slots (180a—180f), said cam slots each being effective to produce one increment of rotation of said shaft (17a) when said plunger (137) is moved in a first axial direction, and means (187, 186; 174, 175) for preventing rotation of said shaft when said plunger is moved in an opposite second axial direction, said actuator being characterised by a second cam member (161) concentric with the first cam member (176) coupled to said shaft (17a) and having a plurality of cam slots (162a—162f) therein, the cam follower (143) having first and second cam engaging surfaces (143a, b), said cam follower being releasably connectable to said plunger (137) in a first position for co-operation with successive cam slots of said plurality of cam slots (180a—180f) in said first cam member (176) to produce one increment of rotation of said shaft in a first direction when said first cam engaging surface (143b) co-operates with one of said successive slots in said first cam member (176) as said plunger (137) is moved in said first axial direction, and releasably connectable to said plunger in a second position for co-operation with successive cam slots of said plurality of cam slots (162a—162f) in said second cam member (161) to produce one increment of rotation of said shaft (17a) in a second direction opposite to said first direction when said second cam engaging surface (143a) co-operates with one of said successive cam slots in said second cam member (161) as said plunger is moved in said first axial direction, and means (182, 170) for positioning each successive cam slot opposite the respective cam engaging surface when said plunger (137) is moved in said second axial direction moving the cam engaging surface (143a, b) out of engagement with the immediate cam slot, and means (193, 192) in each last cam slot (180f, 162f) of the plurality of cam slots in each cam member (176, 161) for shifting said cam follower (143) between said first and second positions.

2. A rotary actuator according to claim 1, wherein the means for preventing rotation of the shaft when the plunger (137) is moved in the opposite direction comprise uni-directional clutch means (186, 187; 174, 175) between the first cam member (176) and the shaft (17a) and between the second cam member (161) and the shaft, to provide uni-directional drive of the shaft by the cam members in opposite directions.

3. A rotary actuator according to claim 2, wherein the said cam slots (180a—f, 162a—f) are all open-ended at one end and the means (182, 170) for positioning each successive cam slot opposite the respective cam engaging surface (143a, b) comprise, for each uni-directional clutch means, a spring (182, 170) which is loaded by movement of the respective cam member relative to the shaft (17a) as the cam follower (143) moves in the said opposite axial direction, and which, upon release of the cam follower from the open end of the respective cam slot, locates the next adjacent cam slot opposite the cam follower.

4. A rotary actuator according to any preceding claim, wherein the first and second cam members (176, 161) are concentric cylinders, and wherein the plunger (137) is formed with a sleeve portion (139) concentric with and movable between the said cam members.

5. A rotary actuator according to any preceding claim, wherein the cam follower (143) comprises a pin with two radial grooves (144, 145), and the plunger (137) comprises a spring detent (150) for engaging either of said grooves thereby detaining the pin at either of two positions such that respective ones of the cam follower surfaces (143a, 143b) engage respective cam members.

6. A rotary actuator according to any preceding claim, wherein the means (193, 192) in each last cam slot (180f, 162f) comprise ramps adapted to shift the cam follower (143) thereby to cause a different cam follower surface to engage with a different cam member upon the next movement of the plunger in the said one axial direction.

## Patentansprüche

1. Drehbetätiger zum Schaffen aufeinanderfolgender Drehbewegungsschritte einer Welle, mit einem ersten Nockenglied, welches mit der Welle verbunden ist, wobei dieses erste Nockenglied eine Vielzahl von Steuerschlitzen aufweist, mit einem Kolben, der zwecks Axialbewegung in Bezug auf die Welle angeordnet ist und eine Einrichtung aufweist, um eine Drehbewegung des Kolbens zu verhindern, mit einem Nockenfolgeglied, das dem Kolben angeordnet ist und mit den Steuerschlitzen zusammenwirkt, wobei die Steuerschlitze je wirksam sind, um einen Drehschritt der Welle zu schaffen, wenn der Kolben in eine erste axiale Richtung bewegt wird, und mit einer Einrichtung zum Verhindern einer Rotation der Welle, wenn der Kolben in eine entgegengesetzte zweite axiale Richtung bewegt ist, dadurch gekennzeichnet, daß ein zweites Nockenglied (161), welches konzentrisch zu dem ersten Nockenglied (176) angeordnet ist, mit der Welle (17a) gekoppelt ist und eine Vielzahl von Steuerschlitzen (162a bis 162f) aufweist, daß das Nockenfolgeglied (143) erste und zweite Nockeneingriffsflächen (143a, b) aufweist, daß das Nockenfolgeglied lösbar mit dem Kolben (137) in einer ersten Position zum Zusammenwirken mit aufeinanderfolgenden Steuerschlitzen der Vielzahl der Steuerschlitze (180a bis 180f) in dem ersten Nockenglied (176) zum Erzeugen eines Drehschrittes der Welle in einer ersten Richtung, wenn die erste Nockeneingriffsfläche (143b) mit einem der aufeinanderfolgenden Schlitze in dem ersten Nockenglied (176) zusammenwirkt, wenn dieser Kolben (137) in die erste axiale Richtung bewegt ist und lösbar mit dem Kolben in einer zweiten Position verbunden ist, um mit aufeinanderfolgenden Steuerschlitzen der Vielzahl an Steuerschlitzen (162a bis 162f) in dem zweiten Nockenglied (161) zusammenzuwirken, um einen Rotationsschritt der Welle (17a) in einer zweiten Richtung zu schaffen, welche der ersten entgegengesetzt ist, wenn die zweite Nockeneingriffsfläche (143a) mit einem der aufeinanderfolgenden Steuerschlitze in dem zweiten Nockenglied (161) zusammenwirkt, wenn der Kolben in diese erste axiale Richtung bewegt ist, daß eine Einrichtung (182, 170) zum Positionieren eines jeden aufeinanderfolgenden Steuerschlitzes gegenüber der entsprechenden Nockeneingriffsfläche vorgesehen ist, wenn dieser Kolben (137) in die zweite axiale Richtung bewegt ist, wobei die Nockeneingriffsfläche (143a, b) außer Eingriff mit dem ersten Steuerschlitz bewegt wird, und daß eine Einrichtung (193, 192) in jedem letzten Steuerschlitz (180f, 162f) der Vielzahl von Steuerschlitzen in jedem Nockenglied (176, 161) zum Verlagern des Nockenfolgegliedes (143) zwischen einer ersten und einer zweiten Lage vorgesehen ist.

2. Drehbetätiger nach Anspruch 1, dadurch gekennzeichnet, daß die Einrichtung zum Verhindern einer Drehung der Welle, wenn der Kolben (137) in die entgegengesetzte Richtung bewegt ist, eine einseitig wirkende Kupplungseinrichtung (186, 187; 174, 175) zwischen dem ersten Nockenglied (176) und der Welle (17a) und zwischen dem zweiten Nockenglied (161) und der Wele umfaßt, um einen einseitig wirkenden Antrieb der Welle durch die Nockenglieder in entgegengesetzte Richtungen zu schaffen.

3. Drehbetätiger nach Anspruch 2, dadurch gekennzeichnet, daß die Steuerschlitze (180a bis f, 162a bis f) an einem Ende offen sind, daß die Einrichtung (182, 170), welche jeden aufeinanderfolgenden Steuerschlitz gegenüber der entsprechenden Nockeneingriffsfläche (143a, b) positioniert, für jede einseitig wirkende Kupplungseinheit eine Feder (182, 170) umfaßt, welche durch Bewegung des entsprechenden Nockengliedes in Bezug auf die Welle (17a) belastet wird, wenn das Nockenfolgeglied (143) sich in die entgegengesetzte axiale Richtung bewegt und welche nach Freigeben des Nockenfolgegliedes aus dem offenen Ende des entsprechenden Steuerschlitzes den nächsten Steuerschlitz gegenüber dem Nockenfolgeglied anordnet.

4. Drehbetätiger nach einem der vorhergehenden Ansprüche, dadurch gekennzeichnet, daß die beiden Nockenglieder (176, 161) konzentrische Zylinder sind, und daß der Kolben (137) mit einem Hülsenabschnitt (139) ausgebildet ist, der zu den Nockengliedern konzentrisch und dazwischen bewegbar ist.

5. Drehbetätiger nach einem der vorhergehenden Ansprüche, dadurch gekennzeichnet, daß das Nockenfolgeglied (143) einen Stift mit zwei Radialausnehmungen (144, 145) umfaßt, und daß der Kolben (137) einen Federraster (150) zum Eingriff mit einer der Ausnehmungen umfaßt, um somit den Stift in der einer der beiden Positionen festzuhalten, so daß entsprechende der Nockenfolgeflächen (143a, 143b) entsprechende Nockenglieder eingreifen.

6. Drehbetätiger nach einem der vorhergehenden Ansprüche, dadurch gekennzeichnet, daß die Einrichtung (193, 192) in jedem letzten Steuerschlitz (180f, 162f) Rampen umfaßt, um das Nockenfolgeglied (143) zu verlagern, so daß verursacht ist, daß eine unterschiedliche Nockenfolgefläche mit einem unterschiedlichen Nockenglied bei der nächsten Bewegung des Kolbens in der einen axialen Richtung in Eingriff gelangt.

**Revendications**

1. Actionneur rotatif (17) destiné à commander des incréments successifs de mouvement rotatif d'un arbre (17a), du type comprenant un premier élément came (176) accouplé audit arbre, ledit premier élément came possédant un pluralité de rainures de came (180a à 180f), un plongeur (137) monté pour décrire un mouvement axial (A) par rapport audit arbre (17a) et comprenant des moyens (155, 156) destinés à s'opposer au mouvement rotatif dudit plongeur (137), un contre-came (143) montée sur ledit plongeur et coopérant avec lesdites rainures de came (180a à 180f), lesdites rainures de came ayant chacune pour action de produire un incrément de rotation dudit arbre (17a) lorsque ledit plongeur (137) se déplace dans un premier sens axial, et des moyens (187, 186, 174, 175) destinés à s'opposer à la rotation dudit arbre lorsque ledit plongeur se déplace dans un deuxième sens axial opposé au premier, ledit actionneur étant caractérisé par un deuxième élément came (161) concentrique au premier élément came (176), accouplé audit arbre (17a) et possédant une pluralité de rainures de came (162a à 162f), la contre-came (143) présentant une première et une deuxième surfaces (143a, 143b) d'attaque de came, ladite contre-came pouvant être accouplée de façon séparable audit plongeur (137) dans une première position pour coopérer avec les rainures de came successives de ladite pluralité de rainures de came (180a à 180f) dudit premier élément came (176), pour produire un incrément de rotation dudit arbre dans un premier sens lorsque ladite première surface (143b) d'attaque de came coopère avec l'une desdites rainures successives dudit premier élément came (176) lorsque ledit plongeur (137) se déplace dans ledit premier sens axial, et pouvant être accouplée de façon séparable audit plongeur dans une deuxième position pour coopérer avec les rainures de came successives de ladite pluralité de rainures de came (162a à 162f) dudit deuxième élément came (161), pour produire un incrément de rotation dudit arbre (17a) dans un deuxième sens opposée au premier sens lorsque ladite deuxième surface d'attaque de came (143a) coopère avec l'une desdites rainures de came successives dudit deuxième élément came (161) lorsque ledit plongeur se déplace dans ledit premier sens axial, et des moyens (182, 170) destinés à positionner chaque rainure de came successive en face de la surface d'attaque de came qui lui correspond respectivement lorsque ledit plongeur (137) se déplace dans ledit deuxième sens axial, en amenant la surface d'attaque de came (143a, b) hors de prise avec la rainure de came immédiatement adjacente, et des moyens (193, 192) prévus dans la dernière rainure de came (180f, 162f) de la pluralité de rainures de came de chaque élément came (176, 161) pour transférer ladite contre-came (143) de l'une à l'autre des première et deuxième positions.

2. Actionner rotatif selon la revendication 1, dans lequel les moyens destinés à s'opposer à la rotation de l'arbre lorsque le plongeur (137) se déplace dans le sens opposé comprennent des moyens d'accouplement unidirectional (186, 187; 174, 175), interposés entre ledit premier élément came (176) et l'arbre (17a) et entre le deuxième élément came (161) et l'arbre, pour assurer un entraînement unidirectionel de l'arbre par les éléments cames, dans les sens opposés.

3. Actionner rotatif selon la revendication 2, dans lequel lesdites rainures de came (180a à f, 162a à f) sont toutes ouvertes à une première extrémité et les moyens (182, 170) destinés à positionner chaque rainure de came successive en face de la surface d'attaque de came (143a, b) qui lui correspond respectivement comprennent, pour chaque moyen d'accouplement unidirectionnel, un ressort (182, 170) qui est chargé par le mouvement de l'élément came qui lui correspond respectivement par rapport à l'arbre (17a) lorsque la contre-came (143) se déplace dans ledit sens axial opposé et qui, lorsque la contre-came est dégagée de l'extrémité ouverte de la rainure de came qui lui correspond respectivement, place la rainure de came immédiatement suivante en face de la contre-came.

4. Actionneur rotatif selon une revendication précédente quelconque, dans lequel le premier et le deuxième éléments cames (176, 161) sont des cylindres concentriques et dans lequel le plongeur (137) est muni d'une partie manchon (139) concentrique auxdits éléments cames et mobile entre ces derniers.

5. Actionner rotatif selon une revendication précédente quelconque dans lequel la contre-came (146) est constituée par une goupille munie de deux gorges radiales (144, 145) et le plongeur (147) contient un dispositif de verrouillage à ressort (150) destiné à s'engager dans l'une ou l'autre desdites gorges pour retenir de cette façon la goupille dans l'une ou l'autre de deux positions telles que les surfaces de contre-came (143a, 143b) qui leur correspondent respectivement attaquent les éléments cames qui leur correspondent respectivement.

6. Actionner rotatif selon une revendication précédente quelconque, dans lequel les moyens (193, 192) prévus dans les dernières rainures de came (180f, 162f) sont constitués par des rampes adaptées pour transférer la contre-came (143), en amenant ainsi une autre surface de contre-came à coopérer avec un autre élément came à la suite du mouvement suivant du plongeur dans ledit premier sens axial.

FIG_1

# FIG_2

FIG_6

FIG_7

FIG_4

FIG_3

FIG_5

| VALVE POSITION | ROTOR START POSITIONS | | | | | |
|---|---|---|---|---|---|---|
| | A | F | E | D | C | B |
| All | - | - | - | - | - | - |
| 1 | P | - | - | - | - | - |
| 2 | - | P | - | - | - | - |
| 3 | - | - | P | - | - | - |
| 4 | - | - | - | P | - | - |
| 5 | - | - | - | - | P | - |
| 6 | - | - | - | - | - | P |

START POSITION → A

TYPE 1

| VALVE POSITION | ROTOR START POSITIONS | | | | | |
|---|---|---|---|---|---|---|
| | A | F | E | D | C | B |
| All | - | - | - | - | - | - |
| 1 | P | - | P | P | P | P |
| 2 | P | P | - | P | P | P |
| 3 | P | P | P | - | P | P |
| 4 | P | P | P | P | - | P |
| 5 | P | P | P | P | P | - |
| 6 | - | P | P | P | P | P |

START POSITION → A

TYPE 2

| VALVE POSITION | ROTOR START POSITIONS | | | | | |
|---|---|---|---|---|---|---|
| | A | F | E | D | C | B |
| All | - | - | - | - | - | - |
| 1 | P | - | - | - | - | P |
| 2 | P | P | - | - | - | - |
| 3 | - | P | P | - | - | - |
| 4 | - | - | P | P | - | - |
| 5 | - | - | - | P | P | - |
| 6 | - | - | - | - | P | P |

START POSITION → A

TYPE 3

| VALVE POSITION | ROTOR START POSITIONS | | | | | |
|---|---|---|---|---|---|---|
| | A | F | E | D | C | B |
| All | - | - | - | - | - | - |
| 1 | P | - | - | - | P | P |
| 2 | P | P | - | - | - | P |
| 3 | P | P | P | - | - | - |
| 4 | - | P | P | P | - | - |
| 5 | - | - | P | P | P | - |
| 6 | - | - | - | P | P | P |

START POSITION → A

TYPE 4

| VALVE POSITION | ROTOR START POSITIONS | | | | | |
|---|---|---|---|---|---|---|
| | A | F | E | D | C | B |
| All | - | - | - | - | - | - |
| 1 | P | - | - | - | P | - |
| 2 | - | P | - | - | - | P |
| 3 | P | - | P | - | - | - |
| 4 | - | P | - | P | - | - |
| 5 | - | - | P | - | P | - |
| 6 | - | - | - | P | - | P |

START POSITION → A

TYPE 5

| VALVE POSITION | ROTOR START POSITIONS | | | | | |
|---|---|---|---|---|---|---|
| | A | F | E | D | C | B |
| All | - | - | - | - | - | - |
| 1 | P | - | P | - | P | - |
| 2 | - | P | - | P | - | P |
| 3 | P | - | P | - | P | - |
| 4 | - | P | - | P | - | P |
| 5 | P | - | P | - | P | - |
| 6 | - | P | - | P | - | P |

START POSITION → A

TYPE 6

FIG_8A

**VALVE POSITION** — ROTOR START POSITIONS

| | A | F | E | D | C | B |
|---|---|---|---|---|---|---|
| All | - | - | - | - | - | - |
| 1 | P | - | - | P | - | - |
| 2 | - | P | - | - | P | - |
| 3 | - | - | P | - | - | P |
| 4 | P | - | - | P | - | - |
| 5 | - | P | - | - | P | - |
| 6 | - | - | P | - | - | P |

TYPE 7

**VALVE POSITION** — ROTOR START POSITIONS

| | A | F | E | D | C | B |
|---|---|---|---|---|---|---|
| All | - | - | - | - | - | - |
| 1 | P | - | P | P | - | - |
| 2 | - | P | - | P | P | - |
| 3 | - | - | P | - | P | P |
| 4 | P | - | - | P | - | P |
| 5 | P | P | - | - | P | - |
| 6 | - | P | P | - | - | P |

TYPE 8

**VALVE POSITION** — ROTOR START POSITIONS

| | A | F | E | D | C | B |
|---|---|---|---|---|---|---|
| All | - | - | - | - | - | - |
| 1 | P | P | - | P | - | - |
| 2 | - | P | P | - | P | - |
| 3 | - | - | P | P | - | P |
| 4 | P | - | - | P | P | - |
| 5 | - | P | - | - | P | P |
| 6 | P | - | P | - | - | P |

TYPE 9

**VALVE POSITION** — ROTOR START POSITIONS

| | A | F | E | D | C | B |
|---|---|---|---|---|---|---|
| All | - | - | - | - | - | - |
| 1 | P | - | - | P | P | P |
| 2 | P | P | - | - | P | P |
| 3 | P | P | P | - | - | P |
| 4 | P | P | P | P | - | - |
| 5 | - | P | P | P | P | - |
| 6 | - | - | P | P | P | P |

TYPE 10

**VALVE POSITION** — ROTOR START POSITIONS

| | A | F | E | D | C | B |
|---|---|---|---|---|---|---|
| All | - | - | - | - | - | - |
| 1 | P | - | P | P | P | - |
| 2 | - | P | - | P | P | P |
| 3 | P | - | P | - | P | P |
| 4 | P | P | - | P | - | P |
| 5 | P | P | P | - | P | - |
| 6 | - | P | P | P | - | P |

TYPE 11

**VALVE POSITION** — ROTOR START POSITIONS

| | A | F | E | D | C | B |
|---|---|---|---|---|---|---|
| All | - | - | - | - | - | - |
| 1 | P | - | P | P | - | P |
| 2 | P | P | - | P | P | - |
| 3 | - | P | P | - | P | P |
| 4 | P | - | P | P | - | P |
| 5 | P | P | - | P | P | - |
| 6 | - | P | P | P | - | P |

TYPE 12

START POSITION → A

FIG. 8B

FIG_9

FIG_10

FIG_11

FIG_12

# FIG_13

| OPERATING STEPS | | PRODUCTION MASTERS-42,43 | PRODUCTION WING-36 | SCSSV-37 | ANNULUS MASTER-47 | ANNULUS WING-48 | CROSSOVER-41 |
|---|---|---|---|---|---|---|---|
| 0 | SHUT-IN/ PIG FLOWLINE | C | C | C | C | C | O |
| 1 | TEST MASTER VALVE | C | O | O | C | C | C |
| 2 | TEST SCSSV | O | O | C | C | C | C |
| 3 | CLOSE MASTER VALVE AND TEST ANNULUS | C | C | C | O | O | C |
| 4 | OPEN SCSSV | O | C | O | O | O | C |
| 5 | PRODUCTION | O | O | O | O | O | C |
| 6 | PRODUCTION THRU ANNULUS LINE | O | O | O | C | C | O |
| | VALVE TYPE | 11 | 10 | 10 | 4 | 4 | 2 |

**FIG_14**

13

28

30

29

34

W

35

17

35a

28a

**FIG_15**

13

28

30

29

34a

W

35

17

35a

28a

# FIG_16